# EUROPÄISCHE PATENTSCHRIFT

(11) **EP 4 028 277 B1**
(45) Veröffentlichungstag und Bekanntmachung des Hinweises auf die Patenterteilung: **16.08.2023**
(21) Anmeldenummer: 20771523.6
(22) Anmeldetag: 09.09.2020
(51) Int. Cl.: B60K 37/06, G05G 1/08, H01H 19/00, H01H 19/11

(54) **BEDIENVORRICHTUNG FÜR EIN FAHRZEUG UND VERFAHREN ZUM BETREIBEN EINER BEDIENVORRICHTUNG**
OPERATING DEVICE FOR A VEHICLE AND METHOD FOR OPERATING AN OPERATING DEVICE
DISPOSITIF DE COMMANDE POUR UN VÉHICULE ET PROCÉDÉ DE COMMANDE D'UN DISPOSITIF DE COMMANDE

(30) Priorität: 11.09.2019 DE 102019213858
(43) Veröffentlichungstag der Anmeldung: 20.07.2022
(73) Patentinhaber: ZF Friedrichshafen AG, 88046 Friedrichshafen (DE)
(72) Erfinder: FRIBUS, Vitali, 49610 Quakenbrück (DE); PETRZIK, Lenard, 49078 Osnabrück (DE)
(86) Internationale Anmeldenummer: PCT/EP2020/075212
(87) Internationale Veröffentlichungsnummer: WO 2021/048213

(56) Entgegenhaltungen:
- DE-A1-102005 055 307
- DE-A1-102015 110 633
- FR-A1- 3 010 547

## Beschreibung

Die vorliegende Erfindung bezieht sich auf eine Bedienvorrichtung für ein Fahrzeug, ein Lenkrad, Armaturenbrett, eine Mittelkonsole oder Armlehne für ein Fahrzeug mit einer Bedienvorrichtung, ein Fahrzeug mit einer Bedienvorrichtung und ein Verfahren zum Betreiben einer Bedienvorrichtung.

Eine Bedienvorrichtung der eingangs genannten Art ist aus der DE 10 2015 110 633 A1 bekannt.

Die DE 10 2015 110 633 A1 beschreibt eine haptische Bedieneinrichtung und ein Verfahren zum Bedienen von Fahrzeugen.

Vor diesem Hintergrund schafft der vorliegende Ansatz eine verbesserte Bedienvorrichtung für ein Fahrzeug, ein Lenkrad, Armaturenbrett, eine Mittelkonsole oder Armlehne für ein Fahrzeug mit einer verbesserten Bedienvorrichtung, ein Fahrzeug mit einer verbesserten Bedienvorrichtung und ein Verfahren zum Betreiben einer verbesserten Bedienvorrichtung gemäß den Hauptansprüchen. Vorteilhafte Ausgestaltungen ergeben sich aus den Unteransprüchen und der nachfolgenden Beschreibung.

Die mit dem vorgestellten Ansatz erreichbaren Vorteile bestehen darin, dass für eine Bedienvorrichtung eine intuitive Bedienung ermöglicht wird, wobei sich für einen Nutzer abhängig von der Bedienung mehrere spürbare Drehcharakteristika unterscheiden.

Eine Bedienvorrichtung für ein Fahrzeug weist einen drehbaren Grundkörper, eine Elektronikeinheit und eine Dreheinheit auf. Der drehbare Grundkörper weist einen ersten Bedienabschnitt zum Einstellen zumindest einer dem ersten Bedienabschnitt zugeordneten oder zuordenbaren ersten Fahrzeugfunktion des Fahrzeugs und einen zweiten Bedienabschnitt zum Einstellen zumindest einer dem zweiten Bedienabschnitt zugeordneten oder zuordenbaren zweiten Fahrzeugfunktion des Fahrzeugs auf. Die Elektronikeinheit ist dazu ausgebildet, um ein erstes Berührungssignal bereitzustellen, das ein manuelles Berühren des ersten Bedienabschnitts oder Annähern an den ersten Bedienabschnitt repräsentiert, und ein zweites Berührungssignal bereitzustellen, das ein manuelles Berühren des zweiten Bedienabschnitts oder Annähern an den zweiten Bedienabschnitt repräsentiert. Die Dreheinheit ist dazu ausgebildet, um eine Drehbewegung des Grundkörpers zu ermöglichen, wobei die Dreheinheit ausgebildet ist, um ansprechend auf das erste Berührungssignal eine erste Drehcharakteristik der Drehbewegung einzustellen und ansprechend auf das zweite Berührungssignal eine sich von der ersten Drehcharakteristik unterscheidende zweite Drehcharakteristik der Drehbewegung einzustellen.

Bei dem Fahrzeug kann es sich um ein Straßenfahrzeug, beispielsweise um einen Personenkraftwagen handeln. Die Bedienvorrichtung kann in entsprechender Weise auch im Zusammenhang mit anderen Fahrzeugen, Geräten oder Maschinen eingesetzt werden. Eine Fahrzeugfunktion kann eine von einem Nutzer unter Verwendung der Bedienvorrichtung einstellbare oder Steuerbare Funktionalität sein. Beispielsweise kann eine Fahrzeugfunktion eine Grundfunktionalität des Fahrzeugs, wie eine Gangschaltung oder eine Funktionalität eines Assistenzsystems des Fahrzeugs, wie einen Tempomaten, repräsentieren. Die erste Fahrzeugfunktion kann sich von der zweiten Fahrzeugfunktion unterscheiden, wobei sich die Drehcharakteristika beim Einstellen der beiden unterschiedlichen Funktionen unterscheiden. So kann eine zum Einstellen einer bestimmten Fahrfunktion günstige Drehcharakteristik zugeordnet oder zuordenbar sein. Die erste Fahrzeugfunktion kann aber auch mit der zweiten Fahrzeugfunktion identisch sein, wobei sich beim Einstellen lediglich die Drehcharakteristika unterscheiden, abhängig davon, an welchem Bedienabschnitt gedreht wird. Eine solche Bedienvorrichtung ermöglicht ein Einstellen einer oder mehrerer unterschiedlicher Fahrfunktionen, wobei ein Nutzer der Bedienvorrichtung abhängig davon, welche Fahrfunktion eingestellt wird oder wo die Bedienvorrichtung gedreht wird, eine andere haptische Rückmeldung erfährt. Eine Drehcharakteristik kann sich beispielsweise auf einen Drehwiderstand, einen freigegebenen Drehwinkel oder eine von einem Nutzer bei einer Drehbewegung spürbare Rasterung beziehen. Die erste Drehcharakteristik kann beispielsweise bei der Drehbewegung einen größeren oder kleineren für den Nutzer wahrnehmbaren Widerstand bewirken als die zweite Drehcharakteristik.

Der Grundkörper kann walzenförmig und zusätzlich oder alternativ hohl und zusätzlich oder alternativ kippbar ausgeformt sein. Bei einer hohlen Ausgestaltung des Grundkörpers können platzsparend andere Komponenten der Bedienvorrichtung in dem Grundkörper aufgenommen sein. Ein kippbarer Grundkörper ermöglicht je nach Kippstellung Zusatzfunktionen wie das Betätigen eines Blinkers. Gemäß einer Ausführungsform können der erste Bedienabschnitt und der zweite Bedienabschnitt starr miteinander verbunden sein. Dies ermöglicht ein einfaches einstückiges Bauteil für den Grundkörper, beispielsweise in Form eines geraden Rohrs. Der erste Bedienabschnitt und der zweite Bedienabschnitt können direkt nebeneinander oder hintereinander, beispielsweise fluchtend bezüglich einer Mittelachse des Grundkörpers angeordnet sein. Zur optischen Unterscheidung der Bedienabschnitte kann der Grundkörper eine oder mehrere optische Markierungen aufweisen.

Die Dreheinheit kann einen elektrischen Aktuator, insbesondere eine MRF-Einheit umfassen, um die erste und zusätzlich oder alternativ zweite Drehcharakteristik zu erzeugen. Unter Verwendung einer magnetorheologischen Flüssigkeit (MRF) der MRF-Einheit können schnell und einfach unterschiedliche Drehcharakteristika erzeugt werden.

Gemäß einer Ausführungsform kann die Elektronikeinheit in dem Grundkörper angeordnet sein und zusätzlich oder alternativ eine Berührungssensorik und zusätzlich oder alternativ eine Annäherungssensorik aufweisen, die dazu ausgebildet ist, um das manuelle Berühren des ersten Bedienabschnitts oder manuelle Annähern an den ersten Bedienabschnitt zu sensieren, um das erste Berührungssignal bereitzustellen und zusätzlich oder alternativ das manuelle Berühren des zweiten Bedienabschnitts oder manuelle Annähern an den zweiten Bedienabschnitt zu sensieren, um das zweite Berührungssignal bereitzustellen. So ist eine praktische und funktionale Bauraumausnutzung gewährleistet. Die Berührungs- und zusätzlich oder alternativ Annäherungssensorik können Teil einer berührungs- und zusätzlich oder alternativ annäherungssensitiven Folie sein.

Es ist weiterhin von Vorteil, wenn die Bedienvorrichtung eine Zuordnungseinrichtung aufweist, die dazu ausgebildet ist, um ansprechend auf ein Zuordnungssignal dem ersten Bedienabschnitt eine vierte Fahrzeugfunktion anstelle der ersten Fahrzeugfunktion zuzuordnen und zusätzlich oder alternativ dem zweiten Bedienabschnitt eine fünfte Fahrzeugfunktion anstelle der zweiten Fahrzeugfunktion zuzuordnen. So können mit ein und derselben Bedienvorrichtung schnell und einfach weitere Fahrzeugfunktionen eingestellt werden. Das Zuordnungssignal kann von einem Nutzer durch ein Auswählen einer Fahrzeugfunktion in einem Auswahlmenü erzeugt werden. Das Zuordnungssignal kann aber auch durch die Drehbewegung an dem ersten oder zweiten Bedienabschnitt erzeugt werden, der zur Bedienung des Auswahlmenüs ausgebildet ist.

Die Dreheinheit kann ausgebildet sein, um unter Verwendung des Zuordnungssignals und des ersten Berührungssignals eine vierte Drehcharakteristik der Drehbewegung einzustellen und zusätzlich oder alternativ unter Verwendung des Zuordnungssignals und des zweiten Berührungssignals eine fünfte Drehcharakteristik der Drehbewegung einzustellen. Die vierte Drehcharakteristik kann sich von der ersten und zusätzlich oder alternativ fünften Drehcharakteristik unterscheiden. Ebenso kann sich die fünfte Drehcharakteristik von der zweiten und zusätzlich oder alternativ vierten Drehcharakteristik unterscheiden. So lassen sich auch für die weiteren Fahrfunktionen geeignete weitere Drehcharakteristika einstellen.

Die Dreheinheit kann einen Drehsensor umfassen, der dazu ausgebildet ist, um die Drehbewegung zu sensieren und ein Drehsignal bereitzustellen. Auch kann die Bedienvorrichtung eine Steuereinrichtung aufweisen, die dazu ausgebildet ist, um unter Verwendung des Drehsignals und des ersten Berührungssignals ein erstes Steuersignal zum Ansteuern zumindest der dem ersten Bedienabschnitt zugeordneten Fahrzeugfunktion auszugeben oder unter Verwendung des Drehsignals und des zweiten Berührungssignals ein zweites Steuersignal zum Ansteuern zumindest der dem zweiten Bedienabschnitt zugeordneten Fahrzeugfunktion auszugeben, wobei die Fahrzeugfunktionen zumindest eine Fahrstufe, Fahrerlebnisstufe, Komfortstufe, Infotainmenteinstellung, Lichteinstellung oder Menüeinstellung umfassen können.

Gemäß einer weiteren vorteilhaften Ausführungsform kann der Grundkörper zumindest einen dritten Bedienabschnitt zum Einstellen zumindest einer dem dritten Bedienabschnitt zugeordneten oder zuordenbaren dritten Fahrzeugfunktion des Fahrzeugs aufweisen, wobei die Elektronikeinheit dazu ausgebildet sein kann, um ein drittes Berührungssignal bereitzustellen, das ein manuelles Berühren des dritten Bedienabschnitts oder Annähern an den dritten Bedienabschnitt repräsentiert, wobei die Dreheinrichtung dazu ausgebildet ist, um ansprechend auf das dritte Berührungssignal eine sich von der ersten Drehcharakteristik und zusätzlich oder alternativ zweiten Drehcharakteristik unterscheidende dritte Drehcharakteristik der Drehbewegung einzustellen. So sind mittels der Bedienvorrichtung drei Fahrfunktionen einstellbar.

Ein Lenkrad, Armaturenbrett, eine Mittelkonsole oder eine Armlehne für ein Fahrzeug weist eine Bedienvorrichtung auf, die in einer der vorangehend beschriebenen Varianten ausgeformt ist. Die genannten Fahrzeugkomponenten eigenen sich zur Aufnahme einer Bedienvorrichtung, welche intuitiv, beispielsweise während einer Fahrt mit dem Fahrzeug, bedienbar sein soll.

Ein Fahrzeug weist eine Bedienvorrichtung auf, die in einer der vorangehend beschriebenen Varianten ausgeformt ist. Bei einem solchen Fahrzeug können dank der Bedienvorrichtung beliebige Fahrzeugfunktionen intuitiv von einem Nutzer eingestellt werden.

Ein Verfahren zum Betreiben einer Bedienvorrichtung weist die folgenden Schritte auf:
Einlesen eines ersten Berührungssignals, das ein manuelles Berühren des ersten Bedienabschnitts oder Annähern an den ersten Bedienabschnitt der Bedienvorrichtung repräsentiert oder eines zweiten Berührungssignals, das ein manuelles Berühren des zweiten Bedienabschnitts oder Annähern an den zweiten Bedienabschnitt der Bedienvorrichtung repräsentiert; und

Einstellen der ersten Drehcharakteristik unter Verwendung des ersten Berührungssignals oder der sich von der ersten Drehcharakteristik unterscheidenden zweiten Drehcharakteristik unter Verwendung des zweiten Berührungssignals.

Dieses Verfahren kann beispielsweise in Software oder Hardware oder in einer Mischform aus Software und Hardware beispielsweise in einem Steuergerät implementiert sein.

Ausführungsbeispiele des hier vorgestellten Ansatzes sind in den Zeichnungen dargestellt und in der nachfolgenden Beschreibung näher erläutert. Es zeigen:
- Fig. 1: eine schematische Darstellung eines Fahrzeugs mit einer Bedienvorrichtung gemäß einem Ausführungsbeispiel;
- Fig. 2 bis 9: je eine schematische Darstellung einer Bedienvorrichtung gemäß einem Ausführungsbeispiel;
- Fig. 10: eine Querschnittsdarstellung einer Bedienvorrichtung gemäß einem Ausführungsbeispiel;
- Fig. 11 bis 12: je eine schematische Darstellung einer Bedienvorrichtung gemäß einem Ausführungsbeispiel; und
- Fig. 13: ein Ablaufdiagramm eines Verfahrens zum Betreiben einer Bedienvorrichtung gemäß einem Ausführungsbeispiel.

In der nachfolgenden Beschreibung bevorzugter Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

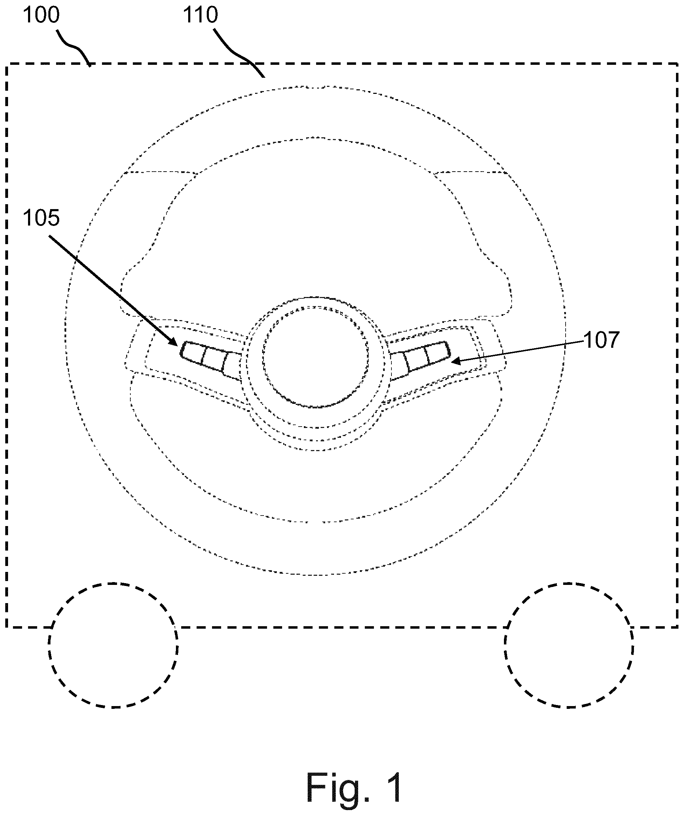

Fig. 1 zeigt eine schematische Darstellung eines Fahrzeugs 100 mit einer Bedienvorrichtung 105 gemäß einem Ausführungsbeispiel.

Lediglich beispielhaft ist die Bedienvorrichtung 105 gemäß diesem Ausführungsbeispiel an einem Lenkrad 110 des Fahrzeugs 100 angeordnet. Gemäß einem alternativen Ausführungsbeispiel ist die Bedienvorrichtung 105 an einem Armaturenbrett, einer Mittelkonsole oder Armlehne des Fahrzeugs 100 angeordnet oder anordenbar. Gemäß diesem Ausführungsbeispiel weist das Lenkrad 110 ferner eine weitere Bedienvorrichtung 107 auf. Die Bedienvorrichtungen 105, 107 sind gemäß diesem Ausführungsbeispiel walzenförmig oder stabförmig ausgeformt und erstrecken sich je zu entgegengesetzten Richtungen von einem mittleren Bereich des Lenkrad 110 weg.

Gemäß diesem Ausführungsbeispiel ermöglichen es die Bedienvorrichtungen 105, 107 einem Fahrer des Fahrzeugs 100 Fahrzeugfunktionen des Fahrzeugs 100 einzustellen. Die unter Verwendung der Bedienvorrichtungen 105, 107 einstellbaren Fahrzeugfunktionen können dabei fest vorgegeben oder variabel sein. Die Bedienvorrichtungen 105, 107 können als Ersatz oder Ergänzung herkömmlicher Schaltelemente in dem Fahrzeug 100 eingesetzt werden.

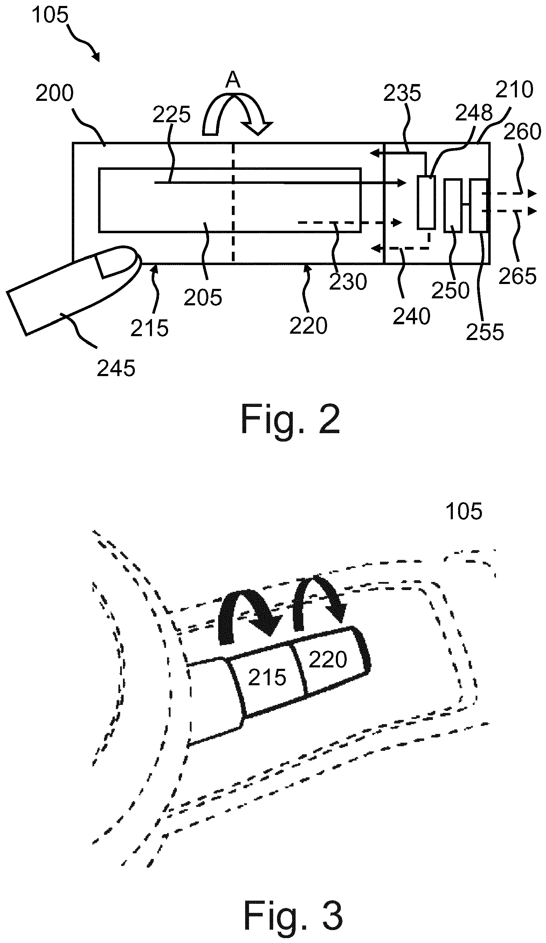

Fig. 2 zeigt eine schematische Darstellung einer Bedienvorrichtung 105 gemäß einem Ausführungsbeispiel. Dabei kann es sich um die in Fig. 1 beschriebene Bedienvorrichtung 105 handeln.

Die Bedienvorrichtung 105 weist einen drehbaren Grundkörper 200, eine Elektronikeinheit 205 und eine Dreheinheit 210 auf. Der drehbare Grundkörper 200 weist einen ersten Bedienabschnitt 215 zum Einstellen zumindest einer dem ersten Bedienabschnitt 215 zugeordneten oder zuordenbaren ersten Fahrzeugfunktion des Fahrzeugs und einen zweiten Bedienabschnitt 220 zum Einstellen zumindest einer dem zweiten Bedienabschnitt 220 zugeordneten oder zuordenbaren zweiten Fahrzeugfunktion des Fahrzeugs auf. Die Elektronikeinheit 205 ist dazu ausgebildet, um ein erstes Berührungssignal 225 bereitzustellen, das ein manuelles Berühren des ersten Bedienabschnitts 215 oder Annähern an den ersten Bedienabschnitt 215 repräsentiert, und um ein zweites Berührungssignal 230 bereitzustellen, das ein manuelles Berühren des zweiten Bedienabschnitts 220 oder Annähern an den zweiten Bedienabschnitt 220 repräsentiert. Zum Erkennen einer entsprechenden Berührung oder Annäherung wird gemäß einem Ausführungsbeispiel eine geeignete Sensorik, beispielsweise eine kapzative Sensorik eingesetzt, die Teil der Elektronikeinheit 205 sein kann oder mit der Elektronikeinheit 205 gekoppelt sein kann.

Die Dreheinheit 210 ist dazu ausgebildet, um eine Drehbewegung A des Grundkörpers 200 zu ermöglichen. Die Dreheinheit 210 stellt somit ein Lager für den Grundkörper 200 oder eine mit dem Grundkörper 200 gekoppelte Welle oder Achse dar. Die Dreheinheit 210 ist ausgebildet, um ansprechend auf das erste Berührungssignal 225 eine erste Drehcharakteristik 235 der Drehbewegung A einzustellen und ansprechend auf das zweite Berührungssignal 230 eine sich von der ersten Drehcharakteristik 235 unterscheidende zweite Drehcharakteristik 240 der Drehbewegung A einzustellen.

Gemäß diesem Ausführungsbeispiel stellt die Elektronikeinheit 205 das erste Berührungssignal 225 bereit, da sich ein Nutzer der Bedienvorrichtung 105 mit dem Finger 245 dem ersten Bedienabschnitt 215 nähert oder diesen berührt. Die Dreheinheit 210 liest das erste Berührungssignal 225 ein und stellt ansprechend auf das erste Berührungssignal 225 die erste Drehcharakteristik 235 der Drehbewegung A des Grundkörpers 200 ein. Gemäß einem alternativen Ausführungsbeispiel stellt die Elektronikeinheit 205 das zweite Berührungssignal 230 bereit, wenn sich der Nutzer der Bedienvorrichtung 105 mit dem Finger 245 dem zweiten Bedienabschnitt 220 nähert oder diesen berührt. Die Dreheinheit 210 liest dann gemäß dem alternativen Ausführungsbeispiel das zweite Berührungssignal 230 ein und stellt ansprechend auf das zweite Berührungssignal 230 die sich von der ersten Drehcharakteristik 235 unterscheidende zweite Drehcharakteristik 240 der Drehbewegung A des Grundkörpers 200 ein.

Der Grundkörper 200 ist gemäß diesem Ausführungsbeispiel walzenförmig und/oder hohl ausgeformt. Die Elektronikeinheit 205 ist gemäß diesem Ausführungsbeispiel zumindest teilweise in dem Grundkörper 200 aufgenommen angeordnet. Ferner weist die Elektronikeinheit 205 gemäß diesem Ausführungsbeispiel eine Berührungssensorik und/oder eine Annäherungssensorik auf, die dazu ausgebildet ist, um das manuelle Berühren des ersten Bedienabschnitts 215 oder manuelle Annähern an den ersten Bedienabschnitt 215 zu sensieren und darauf ansprechend das erste Berührungssignal 225 bereitzustellen und/oder das manuelle Berühren des zweiten Bedienabschnitts 220 oder manuelle Annähern an den zweiten Bedienabschnitt 220 zu sensieren und darauf ansprechend das zweite Berührungssignal 230 bereitzustellen.

Der erste Bedienabschnitt 215 und der zweite Bedienabschnitt 220 sind gemäß diesem Ausführungsbeispiel starr miteinander verbunden und/oder nebeneinander, also aneinander angrenzend, angeordnet. Somit handelt es sich bei den Bedienabschnitten 215, 220 um Teilbereiche ein und desselben Grundkörpers 200. Wenn der erste Bedienabschnitt 215 die Drehbewegung A ausführt, dreht sich der zweite Bedienabschnitt 220 entsprechend mit, und umgekehrt. Die zwei Bedienabschnitte 215, 220 sind lediglich beispielhaft gezeigt, es sind auch drei oder mehr Bedienabschnitte realisierbar, die als weitere Teilbereich des Grundkörpers 200 ausgeführt sein können. Gemäß unterschiedlicher Ausführungsbeispiele ist eine räumliche Aufteilung der Bedienabschnitten 215, 220 an dem Grundkörper 200 fest vorgegeben oder variabel. Beispielsweise kann eine Trennlinie zwischen den Bedienabschnitten 215, 220 verschiebbar sein. Dazu kann die Trennlinie unter Verwendung einer Leuchteinrichtung angezeigt werden.

Die Dreheinheit 210 umfasst gemäß diesem Ausführungsbeispiel einen elektrischen Aktuator 248, insbesondere eine MRF-Einheit, um die erste Drehcharakteristik 235 und/oder zweite Drehcharakteristik 240 zu erzeugen. Gemäß einem Ausführungsbeispiel stellen die Berührungssignale 225, 230 Steuersignale zum Ansteuern des Aktuators 248 dar. Gemäß einem alternativen Ausführungsbeispiel ist die Dreheinheit 210 ausgebildet, um unter Verwendung der Berührungssignale 225, 230 Steuersignale zum Ansteuern des Aktuators 248 bereitzustellen. Der Aktuator 248 ist ausgebildet um die Drehbewegung A des Grundkörpers 200 zu beeinflussen, beispielsweise zu bremsen, zu beschränken oder mit einem Bewegungsmuster zu beaufschlagen, durch das dem Nutzer beispielsweise das Gefühl einer Rasterung vermittelt wird. Beispielsweise ist der Aktuator 248 ausgebildet, um ansprechend auf das erste Berührungssignal 225 eine erste Kraft auf den Grundköper 200, beispielsweise eine erste Bremskraft auf eine von der Dreheinheit 210 gelagerten Welle des Grundköper 200 auszuüben und ansprechend auf das zweite Berührungssignal 225 eine zweite Kraft auf den Grundköper 200, beispielsweise eine zweite Bremskraft auf die von der Dreheinheit 210 gelagerte Welle des Grundköper 200 auszuüben, wobei sich die erste Kraft und die zweite Kraft beispielsweise betragsmäßig voneinander unterscheiden.

Die Dreheinheit 210 umfasst gemäß diesem Ausführungsbeispiel außerdem einen Drehsensor 250, der dazu ausgebildet ist, um die Drehbewegung A zu sensieren und ein Drehsignal bereitzustellen. Die Bedienvorrichtung 105 weist ferner eine Steuereinrichtung 255 auf, die dazu ausgebildet ist, um unter Verwendung des Drehsignals und des ersten Berührungssignals 225 ein erstes Steuersignal 260 zum Ansteuern zumindest der dem ersten Bedienabschnitt 215 zugeordneten Fahrzeugfunktion auszugeben und/oder unter Verwendung des Drehsignals und des zweiten Berührungssignals 230 ein zweites Steuersignal 265 zum Ansteuern zumindest der dem zweiten Bedienabschnitt 220 zugeordneten Fahrzeugfunktion auszugeben, wobei die Fahrzeugfunktionen zumindest eine Fahrstufe, Fahrerlebnisstufe, Komfortstufe, Infotainmenteinstellung, Lichteinstellung oder Menüeinstellung umfassen.

Die hier vorgestellte Bedienvorrichtung 105 realisiert ein haptisches Bedienelement mit variabler Haptik, mit welchem eine intuitive Bedienung mehrerer verschiedener Funktionen ermöglicht ist, insbesondere Fahr-, Komfort- und Infotainmentfunktionen im Fahrzeug.

Die haptische Bedienvorrichtung 105 besteht aus dem Grundkörper 200, der Dreheinheit 210 und der Elektronikeinheit 205. Eine Achse der Dreheinheit 210 ist direkt oder über eine Übersetzung mit dem elektrischen Aktuator, gemäß diesem Ausführungsbeispiel einem MRF-Aktor, gekoppelt. Mithilfe des Aktuators sind für die Drehcharakteristika 235, 240 verschiedene Rastierwinkel, Rastierkräfte und/oder Endanschläge realisierbar. Weiterhin ist die Achse der Dreheinheit 210 gemäß diesem Ausführungsbeispiel als Hohlwelle ausgeführt, sodass gemäß diesem Ausführungsbeispiel im Inneren der Hohlwelle ein feststehender Träger integriert ist, auf dem die flexible oder starre Elektronikeinheit 205 mit einer Touch- und/oder Annäherungssensorik und/oder mit Lichtkomponenten befestigt ist. Bei der Touch- und/oder Annäherungssensorik handelt es sich gemäß diesem Ausführungsbeispiel um eine kapazitive Sensorik. Der Grundkörper 200 ist dadurch gekennzeichnet, dass er in Achsrichtung durch mindestens zwei oder mehr funktionale Abschnitte, hier in Form des ersten Bedienabschnitts 215 und des zweiten Bedienabschnitts 220, unterteilt ist. Eine Oberfläche des Grundkörpers 200 ist gemäß diesem Ausführungsbeispiel geschlossen oder aber auch in einzelne sichtbare Teilflächen durch beispielsweise eine teilweise Verblendung unterteilt. Die Bedienabschnitte 215, 220 sind gemäß einem Ausführungsbeispiel taktil, beispielsweise durch eine oder mehrere Bombierungen, und/oder visuell, beispielsweise durch einen oder mehrere Lichtstreifen und/oder lackierte Symbole, hervorgehoben oder voneinander abgegrenzt, um eine intuitive Bedienung zu ermöglichen. Jeder Bedienabschnitt 215, 220 des Grundkörpers 200 kann einer eindeutigen Funktion zugeteilt sein oder werden, welche zuvor fest oder auch benutzerspezifisch zugewiesen wird. Alternativ können aber auch die Abschnittsfunktionen dynamisch gestaltet werden, z. B. menüabhängig. Hierzu weist die Bedienvorrichtung 105 gemäß einem Ausführungsbeispiel eine Zuordnungseinrichtung auf, die dazu ausgebildet ist, um ansprechend auf ein Zuordnungssignal dem ersten Bedienabschnitt 215 eine vierte Fahrzeugfunktion anstelle der ersten Fahrzeugfunktion zuzuordnen und/oder dem zweiten Bedienabschnitt 220 eine fünfte Fahrzeugfunktion anstelle der zweiten Fahrzeugfunktion zuzuordnen. Gemäß einem Ausführungsbeispiel ist die Dreheinheit 210 ausgebildet, um unter Verwendung des Zuordnungssignals und des ersten Berührungssignals 225 eine vierte Drehcharakteristik der Drehbewegung A einzustellen und/oder unter Verwendung des Zuordnungssignals und des zweiten Berührungssignals 220 eine fünfte Drehcharakteristik der Drehbewegung A einzustellen. Jede Funktion und/oder jeder Bedienabschnitt 215, 220 des Grundkörpers 200 weist eine individuelle Haptik auf. Die Sensierung des jeweiligen Bedienabschnitts 215, 220 erfolgt mittels der Touch- und/oder Annäherungssensorik der integrierten Elektronikeinheit 205. Bei einer Betätigung der haptischen Bedienvorrichtung 105 mit der Hand wird somit zunächst der Bedienabschnitt 215, 220 erkannt, auf dem sich die Hand bzw. der Finger 245 befindet und anschließend die dem Bedienabschnitt 215, 220 und/oder der Abschnittsfunktion zugewiesenen Haptik eingestellt.

Gemäß einem Ausführungsbeispiel umfasst die hier vorgestellte Bedienvorrichtung 105 eine Erweiterung mit weiteren Interaktionsmöglichkeiten wie z. B. Kippen, Drücken, Schieben und/oder Touch, z. B. Wischgesten, und/oder Tap. Gemäß einem Ausführungsbeispiel umfasst die hier vorgestellte Bedienvorrichtung 105 eine Erweiterung mit anderen Bedieneinrichtungen, z. B. mechanischen Tastern und/oder Hebeln. Gemäß einem Ausführungsbeispiel umfasst die hier vorgestellte Bedienvorrichtung 105 eine Erweiterung mit Anzeigevorrichtungen, z. B. einem Display und/oder einer Symbolbeleuchtung. Gemäß einem Ausführungsbeispiel umfasst die hier vorgestellte Bedienvorrichtung 105 eine Kombination mit anderen Anzeigevorrichtungen, z. B. einem Fahrerdisplay, einem Mittelkonsolendisplay, kurz "CID" und/oder einem Sichtfeldanzeigegerät, kurz "HUD". Gemäß einem Ausführungsbeispiel umfasst die hier vorgestellte Bedienvorrichtung 105 eine Kombination mit Soundeingabevorrichtungen und/oder Soundausgabevorrichtungen, z. B. eine akustische Bestätigung von Interaktionen, Spracheingaben und/oder Sprachausgabe als Bestätigung oder Vorauswahl. Gemäß einem Ausführungsbeispiel umfasst die hier vorgestellte Bedienvorrichtung 105 eine Kombination mit anderen Eingabevorrichtungen wie Tasten, Hebeln und/oder Touchpads.

Fig. 3 zeigt eine schematische Darstellung einer Bedienvorrichtung 105 gemäß einem Ausführungsbeispiel. Dabei kann es sich um die in Fig. 1 oder 2 beschriebene Bedienvorrichtung 105 handeln. Wie in Fig. 1 beschrieben, ist die Bedienvorrichtung 105 gemäß diesem Ausführungsbeispiel an dem Lenkrad angeordnet und in Nahansicht dargestellt.

Die Bedienvorrichtung 105 ist gemäß diesem Ausführungsbeispiel als eine Daumenwalze mit variabler Funktionsbelegung zur Bedienung mit einem Daumen ausgeformt.

Der erste Bedienabschnitt 215 ist gemäß diesem Ausführungsbeispiel an einem linken Bereich der Daumenwalze, also näher an dem mittleren Bereich des Lenkrads angeordnet, als der zweite Bedienabschnitt 220. Die Bedienvorrichtung 105 stellt gemäß diesem Ausführungsbeispiel ansprechend auf das erste Berührungssignal die erste Drehcharakteristik ein, die eine grobe Haptik des ersten Bedienabschnitts 215 repräsentiert. Durch Betätigen des ersten Bedienabschnitts 215, also durch Tätigen der Drehbewegung an dem ersten Bedienabschnitt 215 ist gemäß diesem Ausführungsbeispiel als die erste Fahrzeugfunktion ein Menüwechsel in einem Hauptmenü ausführbar.

Der zweite Bedienabschnitt 220 ist gemäß diesem Ausführungsbeispiel an einem rechten Bereich der Daumenwalze angeordnet. Die Bedienvorrichtung 105 stellt gemäß diesem Ausführungsbeispiel ansprechend auf das zweite Berührungssignal die zweite Drehcharakteristik ein, die eine leichtgängige Haptik des zweiten Bedienabschnitts 220 repräsentiert. Durch Betätigen des zweiten Bedienabschnitts 220, also durch Tätigen der Drehbewegung an dem zweiten Bedienabschnitt 220 ist gemäß diesem Ausführungsbeispiel als die zweite Fahrzeugfunktion menüabhängig und/oder abhängig von einer Drehrichtung der Drehbewegung eine Skalierung "größer" und/oder "kleiner" ausführbar.

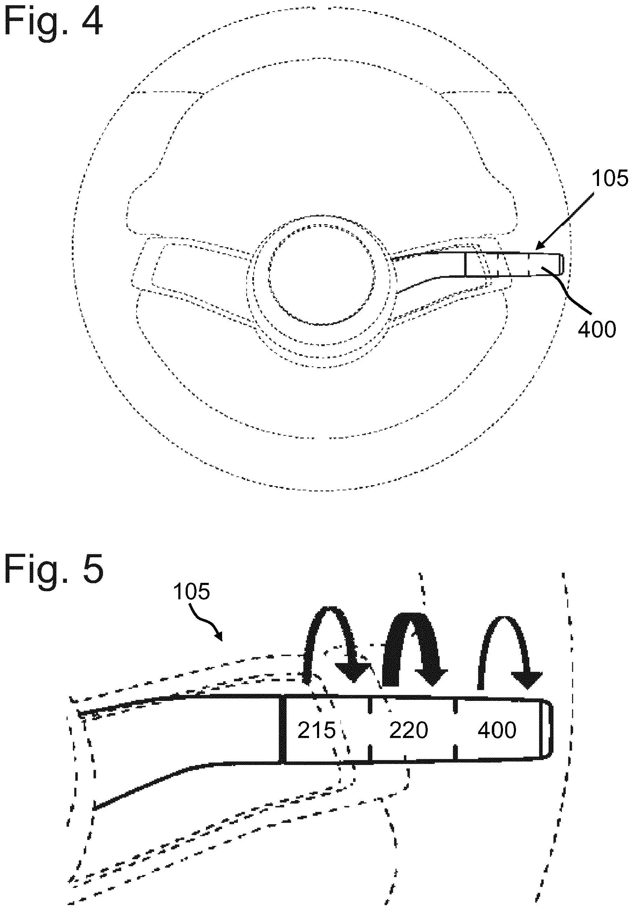

Fig. 4 zeigt eine schematische Darstellung einer Bedienvorrichtung 105 gemäß einem Ausführungsbeispiel. Dabei kann es sich um eine der anhand einer der vorangegangenen Figuren beschriebenen Bedienvorrichtungen 105 handeln, mit dem Unterscheid, dass die Bedienvorrichtung 105 gemäß diesem Ausführungsbeispiel einen dritten Bedienanschnitt 400 aufweist. Optional ist zumindest der Grundkörper 200 kippbar ausgeformt. Wie in Fig. 1 beschrieben, ist die Bedienvorrichtung 105 gemäß diesem Ausführungsbeispiel an dem Lenkrad angeordnet, von dem sich gemäß diesem Ausführungsbeispiel lediglich eine Bedienvorrichtung 105 erstreckt.

Der Grundkörper 200 weist gemäß diesem Ausführungsbeispiel den dritten Bedienabschnitt 400 zum Einstellen zumindest einer dem dritten Bedienabschnitt 400 zugeordneten oder zuordenbaren dritten Fahrzeugfunktion des Fahrzeugs auf, wobei die Elektronikeinheit dazu ausgebildet ist, um ein drittes Berührungssignal bereitzustellen, das ein manuelles Berühren des dritten Bedienabschnitts 400 oder Annähern an den dritten Bedienabschnitt repräsentiert, wobei die Dreheinrichtung dazu ausgebildet ist, um ansprechend auf das dritte Berührungssignal eine sich von der ersten Drehcharakteristik und/oder zweiten Drehcharakteristik unterscheidende dritte Drehcharakteristik der Drehbewegung einzustellen.

Die Bedienvorrichtung 105 ist gemäß diesem Ausführungsbeispiel als ein Kipphebel mit fester Funktionsbelegung und/oder variabler Funktionsbelegung ausgeformt. Eine Nahansicht der hier beschriebenen Bedienvorrichtung 105 ist in Fig. 5 gezeigt.

Fig. 5 zeigt eine schematische Darstellung einer Bedienvorrichtung 105 gemäß einem Ausführungsbeispiel. Dabei kann es sich um die in Fig. 4 beschriebene Bedienvorrichtung 105 in Nahansicht handeln.

Die Bedienvorrichtung 105 ist gemäß einem ersten Ausführungsbeispiel als ein Kipphebel mit fester Funktionsbelegung ausgeformt. Die Bedienvorrichtung 105 stellt gemäß diesem ersten Ausführungsbeispiel ansprechend auf das erste Berührungssignal die erste Drehcharakteristik ein, die eine grobe Haptik des ersten Bedienabschnitts 215 mit festen Rasten repräsentiert. Durch Betätigen des ersten Bedienabschnitts 215 ist gemäß diesem ersten Ausführungsbeispiel als die erste Fahrzeugfunktion ein Gangwahlschalter mit den Fahrstufen P, R, N und D betätigbar. Der zweite Bedienabschnitt 220 ist gemäß dem ersten Ausführungsbeispiel an einem mittleren Bereich der Daumenwalze angeordnet. Die Bedienvorrichtung 105 stellt gemäß dem ersten Ausführungsbeispiel ansprechend auf das zweite Berührungssignal die zweite Drehcharakteristik ein, die eine grobe Haptik des zweiten Bedienabschnitts 220 repräsentiert. Durch Betätigen des zweiten Bedienabschnitts 220, ist gemäß dem ersten Ausführungsbeispiel als die zweite Fahrzeugfunktion ein Fahrerlebnisschalter mit den Stufen "Eco", "Komfort", und/oder "Sport" betätigbar. Der dritte Bedienabschnitt 400 ist gemäß dem ersten Ausführungsbeispiel an einem rechten Bereich der Daumenwalze angeordnet. Die Bedienvorrichtung 105 stellt gemäß diesem ersten Ausführungsbeispiel ansprechend auf das dritte Berührungssignal die dritte Drehcharakteristik ein, die eine leichte Haptik des dritten Bedienabschnitts 400 repräsentiert. Durch Betätigen des dritten Bedienabschnitts 400 ist gemäß diesem ersten Ausführungsbeispiel als die dritte Fahrzeugfunktion ein Lichtwechsel mit den Einstellungen "Standlicht", "Auto", "Tagfahrlicht" und/oder "Nebel" betätigbar.

Gemäß einem zweiten Ausführungsbeispiel ist die Bedienvorrichtung 105 als ein Kipphebel mit einer festen Funktionsbelegung und einer variablen Funktionsbelegung ausgeformt: Gemäß dem zweiten Ausführungsbeispiel stellt die Bedienvorrichtung 105 ansprechend auf das erste Berührungssignal die erste Drehcharakteristik ein, die eine grobe Haptik des ersten Bedienabschnitts 215 mit festen Rasten repräsentiert. Durch Betätigen des ersten Bedienabschnitts 215 ist gemäß diesem zweiten Ausführungsbeispiel als die erste Fahrzeugfunktion ein Gangwahlschalter mit den Fahrstufen P, R, N und D betätigbar. Die Bedienvorrichtung 105 stellt gemäß dem zweiten Ausführungsbeispiel ansprechend auf das zweite Berührungssignal die zweite Drehcharakteristik ein, die eine grobe Haptik des zweiten Bedienabschnitts 220 repräsentiert. Durch Betätigen des zweiten Bedienabschnitts 220, ist gemäß diesem Ausführungsbeispiel als die zweite Fahrzeugfunktion eine Menüauswahl aus einem Fahrerlebnisschalter, kurz "FES", Licht und/oder einem Abstandsregler "Distance Control" betätigbar. Gemäß dem zweiten Ausführungsbeispiel weist der dritte Bedienabschnitt 400 variable Funktionen auf. Die Bedienvorrichtung 105 stellt gemäß dem zweiten Ausführungsbeispiel ansprechend auf das dritte Berührungssignal die dritte Drehcharakteristik ein, die eine wechselnde Haptik des dritten Bedienabschnitts 400 repräsentiert. Durch Betätigen des dritten Bedienabschnitts 400 ist gemäß diesem Ausführungsbeispiel als die dritte Fahrzeugfunktion menüabhängig eine Skalierung in den Menüs, beispielsweise eine Skalierung des "FES" betätigbar.

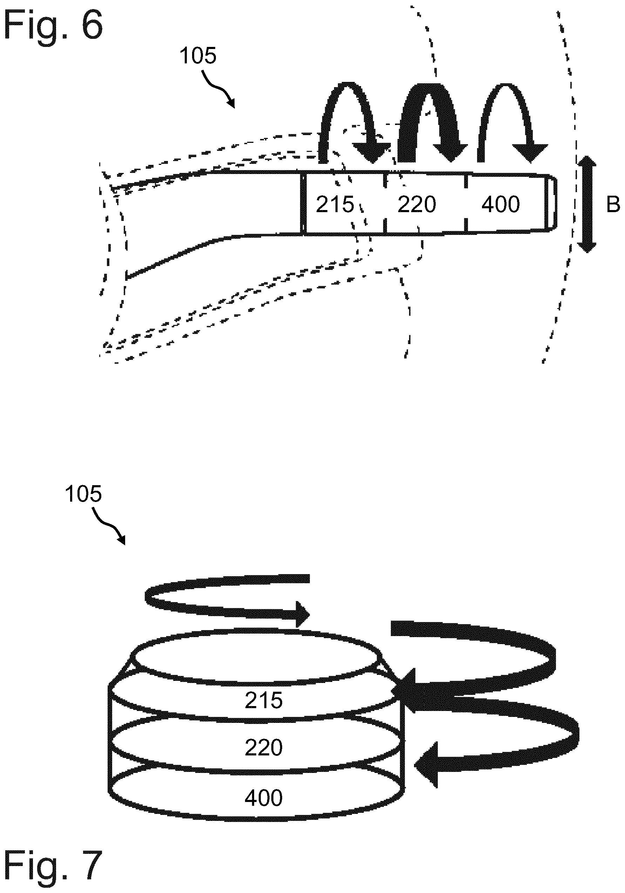

Fig. 6 zeigt eine schematische Darstellung einer Bedienvorrichtung 105 gemäß einem Ausführungsbeispiel. Dabei kann es sich um die in Fig. 5 beschriebene Bedienvorrichtung 105 mit fester Funktionsbelegung handeln. Gemäß diesem Ausführungsbeispiel ist die Bedienvorrichtung 105 zusätzlich dazu ausgebildet, um ansprechend auf eine Kippbewegung B der Daumenwalze ein Blinkersignal auszugeben, das abhängig von der Kippbewegung nach oben oder nach unten einen Blinker links oder einen Blinker rechts des Fahrzeugs aktiviert.

Fig. 7 zeigt eine schematische Darstellung einer Bedienvorrichtung 105 gemäß einem Ausführungsbeispiel. Dabei kann es sich um eine der anhand einer der vorangegangenen Figuren beschriebenen Bedienvorrichtungen 105 handeln, mit dem Unterscheid, dass die Bedienvorrichtung 105 gemäß diesem Ausführungsbeispiel als ein Drehsteller ausgeformt ist.

Lediglich beispielhaft weist der Drehsteller gemäß diesem Ausführungsbeispiel drei Bedienabschnitte 215, 220, 400 auf, gemäß einem alternativen Ausführungsbeispiel weist der Drehsteller lediglich zwei der Bedienabschnitte 215, 220, 400 oder mehr Bedienabschnitte auf. Die Bedienabschnitte 215, 220, 400 sind gemäß diesem Ausführungsbeispiel übereinandergestapelt angeordnet.

Eine Haptik des Drehstellers variiert gemäß diesem Ausführungsbeispiel nach den Bedienabschnitten 215, 220, 400, auch Bereiche genannt, an welchen er bedient wird. Wird der Drehsteller weiter oberhalb betätigt, hier also beispielhaft an dem ersten Bedienabschnitt 215, gibt er eine leichte Haptik wieder und lässt eine Skalierung des jeweiligen Untermenüs zu. Wird der Drehsteller weiter unterhalb betätigt, hier beispielhaft an dem zweiten Bedienabschnitt 220 und/oder dritten Bedienabschnitt 400, gibt er eine grobe Haptik wieder und lässt eine Steuerung des Menüs zu. Ein solcher Drehsteller ist in unterschiedlichen Bereichen integriert oder integrierbar, gemäß einem Ausführungsbeispiel in einer Mittelkonsole, Armlehne und/oder einem Lenkrad für ein Fahrzeug.

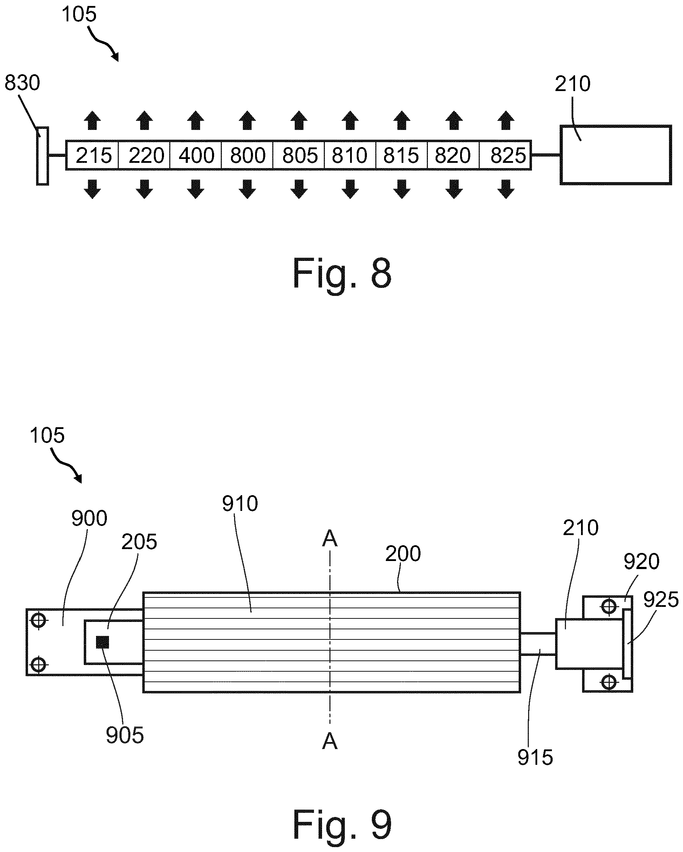

Fig. 8 zeigt eine schematische Darstellung einer Bedienvorrichtung 105 gemäß einem Ausführungsbeispiel. Dabei kann es sich um eine der anhand einer der Figuren 1 bis 6 beschriebenen beschriebenen Bedienvorrichtungen 105 handeln, mit dem Unterschied, dass die Bedienvorrichtung 105 gemäß diesem Ausführungsbeispiel weitere Bedienabschnitte 800, 805, 810, 815, 820, 825 aufweist.

Gemäß diesem Ausführungsbeispiel weist die Bedienvorrichtung 105 einen vierten Bedienabschnitt 800, einen fünften Bedienabschnitt 805, einen sechsten Bedienabschnitt 810, einen siebten Bedienabschnitt 815, einen achten Bedienabschnitt 820 und/oder einen neunten Bedienabschnitt 825 auf, welche anschließend an den dritten Bedienabschnitt 400 nebeneinander angeordnet sind. Der neunte Bedienabschnitt 825 ist gemäß diesem Ausführungsbeispiel benachbart zu der Dreheinrichtung 210 angeordnet.

Die Bedienvorrichtung 105 realisiert gemäß diesem Ausführungsbeispiel ein Rollenraster, bei dem verschiedene Funktionen haptisch voneinander getrennt sind. Die Dreheinrichtung 210 umfasst gemäß diesem Ausführungsbeispiel eine MRF-Einheit, die auch als "MRF-Modul" bezeichnet werden kann. Das Rollenraster beschreibt eine physikalisch zusammenhängende Rolle, welche durch eine mechanische Abgrenzung unterteilt ist und somit die verschiedenen Funktionen abbilden kann. Das Rollenraster ist gemäß einem Ausführungsbeispiel in einer Mittelkonsole und/oder einem Armaturenbrett, beispielsweise für ein Fahrzeug, integrierbar oder integriert.

Gemäß einem Ausführungsbeispiel ist durch ein Betätigen des ersten Bedienabschnitts 215 eine Sitzheizung einstellbar. Gemäß einem Ausführungsbeispiel ist durch ein Betätigen des zweiten Bedienabschnitts 220 eine Temperatur einstellbar. Gemäß einem Ausführungsbeispiel ist durch ein Betätigen des dritten Bedienabschnitts 400 eine Lautstärke einstellbar. Gemäß einem Ausführungsbeispiel ist durch ein Betätigen des vierten Bedienabschnitts 800 eine Sitzeinstellung einstellbar. Gemäß einem Ausführungsbeispiel ist durch ein Betätigen des fünften Bedienabschnitts 805 eine Lüftung einstellbar.

Gemäß einem Ausführungsbeispiel ist ein erstes Ende des Grundkörpers der Bedienvorrichtung 105 von der Dreheinrichtung 210 gelagert aufgenommen und ein dem ersten Ende gegenüberliegendes zweites Ende von einem Halteelement 830 gelagert aufgenommen. Auf diese Weise können auch lange Grundkörper, die eine Vielzahl von Bedienabschnitten 215, 220, 400, 800, 805, 810, 815, 820, 825 umfassen, stabil gelagert werden.

Fig. 9 zeigt eine schematische Darstellung einer Bedienvorrichtung 105 gemäß einem Ausführungsbeispiel. Dabei kann es sich um eine der anhand einer der Figuren 1 bis 6 oder 8 beschriebenen Bedienvorrichtungen 105 handeln. Die Bedienvorrichtung 105 weist gemäß diesem Ausführungsbeispiel einen Träger 900 für die Elektronikeinheit 205, einen Fahrzeugstecker 905, eine Folie 910 für eine Berührungs- und/oder Annäherungssensorik, einen Grundkörperträger 915, eine Aktorhalterung 920 und eine Aktorsteuerung 925 auf.

Der Träger 900 ist mit der Elektronikeinheit 205 gekoppelt und erstreckt sich in den Grundkörper 200 hinein, wobei der Träger 900 gemäß diesem Ausführungsbeispiel auf einem der Dreheinheit 210 gegenüberliegenden Ende des Grundkörpers 200 aus dem Grundkörper hinausragt. Auch die in dem Grundkörper 200 aufgenommene Elektronikeinheit 205 ragt gemäß diesem Ausführungsbeispiel an dem Ende hinaus. Der Fahrzeugstecker 905 ist gemäß diesem Ausführungsbeispiel außerhalb des Grundkörpers 200 auf der Elektronikeinheit 205 angeordnet. Die Folie 910 ist gemäß diesem Ausführungsbeispiel transparent und/oder berührungs- und/oder annäherungssensitiv ausgeformt. Die Folie 910 erstreckt sich innerhalb des Grundkörpers 200 zumindest teilweise um die Elektronikeinheit 205 und/oder den Träger 900 herum. Die Dreheinheit 219 weist gemäß diesem Ausführungsbeispiel den elektrischen Aktuator oder Aktor auf, der dazu ausgebildet ist, um die variable Haptik des Grundkörpers zu erzeugen. Der Aktor ist mechanisch mit der Aktorhalterung 920 und elektrisch mit der Aktorsteuerung 925 gekoppelt.

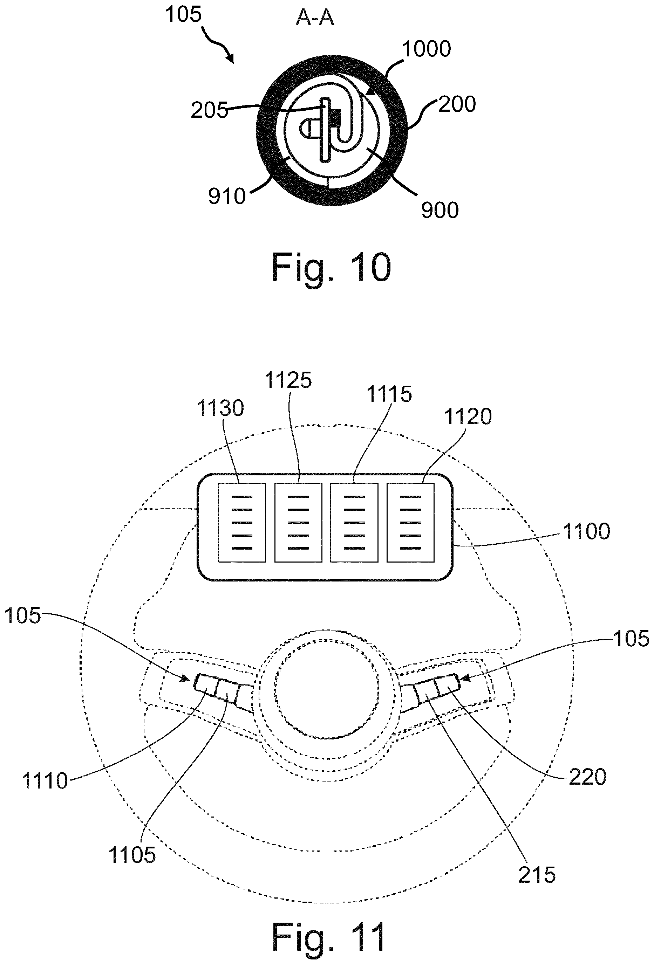

Fig. 10 zeigt eine Querschnittsdarstellung einer Bedienvorrichtung 105 gemäß einem Ausführungsbeispiel. Dabei kann es sich um die in Fig. 9 beschriebene Bedienvorrichtung 105 handeln, welche entlang einer Schnittachse A-A geschnitten dargestellt ist. Die mit der Elektronikeinheit 205 verbundene Folie 910 erstreckt sich gemäß diesem Ausführungsbeispiel in einen Zwischenraum 1000 zwischen eine im Querschnitt kreisförmige Trägeraußenwand des Trägers 900 und eine im Querschnitt kreisförmige Grundkörperinnenwand des Grundkörpers 200. Die Folie 910 umspannt den Träger 900 in dem Zwischenraum 1000 gemäß diesem Ausführungsbeispiel mindestens zur Hälfte.

Fig. 11 zeigt eine schematische Darstellung einer Bedienvorrichtung 105 gemäß einem Ausführungsbeispiel. Dabei kann es sich um eine der anhand einer der Figuren 1 bis 6 oder 8 bis 10 beschriebenen Bedienvorrichtungen 105 handeln. Wie in Fig. 1 beschrieben, ist die Bedienvorrichtung 105 gemäß diesem Ausführungsbeispiel in doppelter Ausführung in Form von Daumenwalzen an dem Lenkrad angeordnet.

Die Bedienvorrichtung 105 ist gemäß diesem Ausführungsbeispiel dazu ausgebildet, um ein Anzeigesignal an eine Anzeigevorrichtung 1100 des Fahrzeugs auszugeben, wobei die Anzeigevorrichtung 1100 dazu ausgebildet ist, um ansprechend auf das Anzeigesignal zumindest eine oder alle mittels der Bedienabschnitte 215, 220, 1105, 1110 einstellbaren Fahrzeugfunktionen anzuzeigen. Gemäß einem Ausführungsbeispiel gibt die Bedienvorrichtung 105 das Anzeigesignal bei einem Betrieb der Bedienvorrichtung 105 aus. Gemäß einem Ausführungsbeispiel gibt die Bedienvorrichtung 105 das Anzeigesignal bei einem Betrieb der Bedienvorrichtung 105 aus, das dazu ausgebildet ist, um eine Anzeige aller den Bedienabschnitten 215, 220, 1105, 1110 zugeordneten Fahrzeugfunktionen auf der Anzeigevorrichtung 1100 zu bewirken.

Gemäß einem alternativen Ausführungsbeispiel gibt die Bedienvorrichtung 105 ansprechend auf das erste Berührungssignal ein erstes Anzeigesignal aus, das dazu ausgebildet ist, um eine erste Anzeige 1115 der dem ersten Bedienabschnitt 115 zugeordneten Fahrzeugfunktion auf der Anzeigevorrichtung 1100 zu bewirken und/oder ansprechend auf das zweite Berührungssignal ein zweites Anzeigesignal aus, das dazu ausgebildet, um eine zweite Anzeige 1120 der dem zweiten Bedienabschnitt 220 zugeordneten Fahrzeugfunktion auf der Anzeigevorrichtung 1100 zu bewirken.

Die weitere Bedienvorrichtung 105 weist gemäß diesem Ausführungsbeispiel zumindest einen weiteren ersten Bedienabschnitt 1105 und einen weiteren zweiten Bedienabschnitt 1110 auf. Die weitere Bedienvorrichtung 105 ist gemäß diesem Ausführungsbeispiel entsprechend der Bedienvorrichtung 105 ausgeformt und ausgebildet. Gemäß einem Ausführungsbeispiel unterscheiden sich durch Betätigen des weiteren ersten Bedienabschnitts 1105 und/oder des weiteren zweiten Bedienabschnitts 1110 einstellbare weitere Fahrzeugfunktionen von den mittels der Bedienvorrichtung 105 einstellbaren Fahrzeugfunktionen. Gemäß einem Ausführungsbeispiel gibt die Bedienvorrichtung 105 ansprechend auf ein weiteres erste Berührungssignal, das ein manuelles Berühren des weiteren ersten Bedienabschnitts 1105 oder Annähern an den weiteren ersten Bedienabschnitt 1105 repräsentiert, ein weiteres erstes Anzeigesignal aus, das dazu ausgebildet, um eine weitere erste Anzeige 1125 der dem weiteren ersten Bedienabschnitt 1105 zugeordneten weiteren Fahrzeugfunktion auf der Anzeigevorrichtung 1100 zu bewirken. Gemäß einem Ausführungsbeispiel gibt die Bedienvorrichtung 105 ansprechend auf ein weiteres zweite Berührungssignal, das ein manuelles Berühren des weiteren zweiten Bedienabschnitts 1110 oder Annähern an den weiteren zweiten Bedienabschnitt 1110 repräsentiert, ein weiteres zweites Anzeigesignal aus, das dazu ausgebildet, um eine weitere zweite Anzeige 1130 der dem weiteren zweiten Bedienabschnitt 1110 zugeordneten weiteren Fahrzeugfunktion auf der Anzeigevorrichtung 1100 zu bewirken.

Gemäß diesem Ausführungsbeispiel werden die erste Anzeige 1115 und die zweite Anzeige 1120 und/oder die weitere erste Anzeige 1125 und die weitere zweite Anzeige 1130 in Abschnitten der Anzeigevorrichtung 1100 angezeigt, welche einer Anordnung der Bedienabschnitte 215, 220, 1105, 1110 an dem Lenkrad entsprechen.

Gemäß einem Ausführungsbeispiel ist die Anzeigevorrichtung 1100 als ein Fahrerdisplay ausgeformt und/oder Teil der Bedienvorrichtung 105.

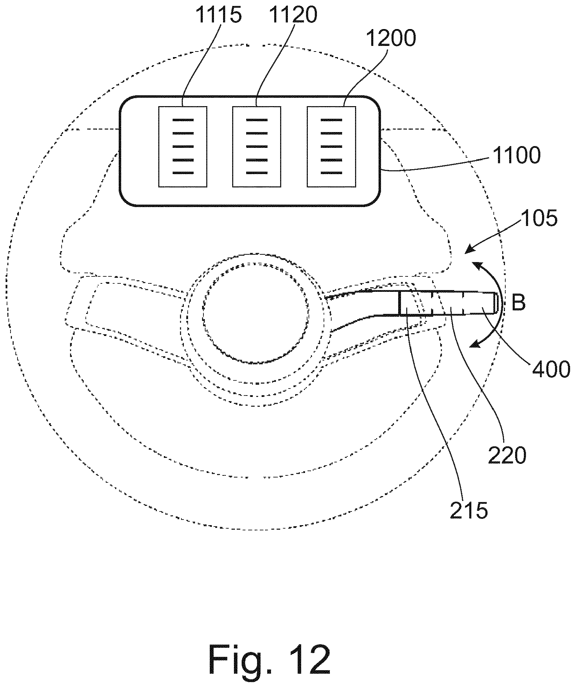

Fig. 12 zeigt eine schematische Darstellung einer Bedienvorrichtung 105 gemäß einem Ausführungsbeispiel. Dabei kann es sich um die in Figur 11 beschriebene Bedienvorrichtung 105 handeln, mit dem Unterschied, dass das Lenkrad lediglich eine Bedienvorrichtung 105 aufweist, welche in Form des in den Figuren 4 bis 6 beschriebenen Kipphebels mit drei Bedienabschnitten 215, 220, 400 ausgeformt ist.

Die Bedienvorrichtung 105 ist gemäß diesem Ausführungsbeispiel dazu ausgebildet, um das Anzeigesignal an die Anzeigevorrichtung 1100 des Fahrzeugs auszugeben, wobei die Anzeigevorrichtung 1100 dazu ausgebildet ist, um ansprechend auf das Anzeigesignal zumindest eine oder alle mittels der Bedienabschnitte 215, 220, 400 einstellbaren Fahrzeugfunktionen anzuzeigen. Gemäß einem Ausführungsbeispiel gibt die Bedienvorrichtung 105 das Anzeigesignal bei einem Betrieb der Bedienvorrichtung 105 aus, das dazu ausgebildet ist, um eine Anzeige aller den Bedienabschnitten 215, 220, 400 zugeordneten Fahrzeugfunktionen auf der Anzeigevorrichtung 1100 zu bewirken.

Gemäß einem alternativen Ausführungsbeispiel gibt die Bedienvorrichtung 105 ansprechend auf das erste Berührungssignal das erste Anzeigesignal aus, das dazu ausgebildet ist, um die erste Anzeige 1115 der dem ersten Bedienabschnitt 215 zugeordneten Fahrzeugfunktion auf der Anzeigevorrichtung 1100 zu bewirken und/oder ansprechend auf das zweite Berührungssignal das zweite Anzeigesignal aus, das dazu ausgebildet ist, um die zweite Anzeige 1120 der dem zweiten Bedienabschnitt 220 zugeordneten Fahrzeugfunktion auf der Anzeigevorrichtung 1100 zu bewirken und/oder ansprechend auf das dritte Berührungssignal ein drittes Anzeigesignal aus, das dazu ausgebildet ist, um eine dritte Anzeige 1200 der dem dritten Bedienabschnitt 400 zugeordneten Fahrzeugfunktion auf der Anzeigevorrichtung 1100 zu bewirken.

Gemäß diesem Ausführungsbeispiel ist durch Betätigen des ersten Bedienabschnitts 215 eine Einstellung eines Abstandsregeltempomats, kurz "ACC Einstellung" durchführbar. Gemäß diesem Ausführungsbeispiel ist durch Betätigen des zweiten Bedienabschnitts 220 ein Fahrerlebnisschalter mit zumindest den Stufen "Eco", "Comfort" und "Sport" einstellbar. Gemäß diesem Ausführungsbeispiel ist durch Betätigen des dritten Bedienabschnitts 400 eine Gangwahl aus den Fahrstufen "P", "R", "N" und/oder "D" durchführbar.

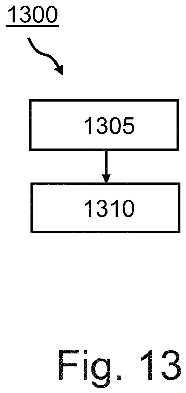

Fig. 13 zeigt ein Ablaufdiagramm eines Verfahrens 1300 zum Betreiben einer Bedienvorrichtung gemäß einem Ausführungsbeispiel. Dabei kann es sich um eine der anhand einer der vorangegangenen Figuren beschriebenen Bedienvorrichtungen 105 handeln.

Das Verfahren 1300 weist einen Schritt 1305 des Einlesens und einen Schritt 1310 des Einstellens auf. Im Schritt 1305 des Einlesens wird ein erstes Berührungssignals, das ein manuelles Berühren des ersten Bedienabschnitts oder Annähern an den ersten Bedienabschnitt der Bedienvorrichtung repräsentiert oder ein zweites Berührungssignal eingelesen, das ein manuelles Berühren des zweiten Bedienabschnitts oder Annähern an den zweiten Bedienabschnitt der Bedienvorrichtung repräsentiert. Im Schritt 1310 des Einstellens wird die erste Drehcharakteristik unter Verwendung des ersten Berührungssignals oder die sich von der ersten Drehcharakteristik unterscheidende zweite Drehcharakteristik unter Verwendung des zweiten Berührungssignals eingestellt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezuaszeichen

- A: Drehbewegung
- B: Kippbewegung
- 100: Fahrzeug
- 105: Bedienvorrichtung
- 107: weitere Bedienvorrichtung
- 110: Lenkrad
- 200: Grundkörper
- 205: Elektronikeinheit
- 210: Dreheinheit
- 215: erster Bedienabschnitt
- 220: zweiter Bedienabschnitt
- 225: erstes Berührungssignal
- 230: zweites Berührungssignal
- 235: erste Drehcharakteristik
- 240: zweite Drehcharakteristik
- 245: Finger
- 248: Aktuator
- 250: Drehsensor
- 255: Steuereinrichtung
- 260: erstes Steuersignal
- 265: zweites Steuersignal
- 400: dritter Bedienabschnitt
- 800: vierter Bedienabschnitt
- 805: fünfter Bedienabschnitt
- 810: sechster Bedienabschnitt
- 815: siebter Bedienabschnitt
- 820: achter Bedienabschnitt
- 825: neunter Bedienabschnitt
- 830: Halteelement
- 900: Träger
- 905: Fahrzeugstecker
- 910: Folie
- 915: Grundkörperträger
- 920: Aktorhalterung
- 925: Aktorsteuerung
- 1000: Zwischenraum
- 1100: Anzeigevorrichtung
- 1105: weiterer erster Bedienabschnitt
- 1110: weiterer zweiter Bedienabschnitt
- 1115: erste Anzeige
- 1120: zweite Anzeige
- 1125: weitere erste Anzeige
- 1130: weitere zweite Anzeige
- 1200: dritte Anzeige
- 1300: Verfahren zum Betreiben einer Bedienvorrichtung
- 1305: Schritt des Einlesens
- 1310: Schritt des Einstellens

## Patentansprüche

1. Bedienvorrichtung (105, 107) für ein Fahrzeug (100), wobei die Bedienvorrichtung (105, 107) die folgenden Merkmale aufweist:
einen drehbaren Grundkörper (200) mit einem ersten Bedienabschnitt (215) zum Einstellen zumindest einer dem ersten Bedienabschnitt (215) zugeordneten oder zuordenbaren ersten Fahrzeugfunktion des Fahrzeugs (100), eine Elektronikeinheit (205), die dazu ausgebildet ist, ein erstes Berührungssignal (225) bereitzustellen, das ein manuelles Berühren des ersten Bedienabschnitts (215) oder Annähern an den ersten Bedienabschnitt (215) repräsentiert, und
eine Dreheinheit (210) zum Ermöglichen einer Drehbewegung (A) des Grundkörpers (200),
**gekennzeichnet durch** einen zweiten Bedienabschnitt (220) des Grundköpers (200) zum Einstellen zumindest einer dem zweiten Bedienabschnitt (220) zugeordneten oder zuordenbaren zweiten Fahrzeugfunktion des Fahrzeugs (100), wobei die Elektronikeinheit (205) ein zweites Berührungssignal (230) bereitstellt, das ein manuelles Berühren des zweiten Bedienabschnitts (220) oder Annähern an den zweiten Bedienabschnitt (220) repräsentiert, und wobei die Dreheinheit (210) ausgebildet ist, ansprechend auf das erste Berührungssignal (225) eine erste Drehcharakteristik (235) der Drehbewegung (A) einzustellen, und ansprechend auf das zweite Berührungssignal (230) eine sich von der ersten Drehcharakteristik (235) unterscheidende, zweite Drehcharakteristik (240) der Drehbewegung (A) einzustellen.

2. Bedienvorrichtung (105, 107) gemäß Anspruch 1, bei der der Grundkörper (200) walzenförmig und/oder hohl und/oder kippbar ausgeformt ist.

3. Bedienvorrichtung (105, 107) gemäß einem der vorangegangenen Ansprüche, bei der der erste Bedienabschnitt (215) und der zweite Bedienabschnitt (220) starr miteinander verbunden sind.

4. Bedienvorrichtung (105, 107) gemäß einem der vorangegangenen Ansprüche, bei der die Dreheinheit (210) einen elektrischen Aktuator (248), insbesondere eine MRF-Einheit umfasst, um die erste und/oder zweite Drehcharakteristik (235, 240) zu erzeugen.

5. Bedienvorrichtung (105, 107) gemäß einem der vorangegangenen Ansprüche, bei der die Elektronikeinheit (205) in dem Grundkörper (200) angeordnet ist und/oder eine Berührungssensorik und/oder eine Annäherungssensorik aufweist, die dazu ausgebildet ist, um das manuelle Berühren des ersten Bedienabschnitts (215) oder manuelle Annähern an den ersten Bedienabschnitt (215) zu sensieren, um das erste Berührungssignal (225) bereitzustellen und/oder das manuelle Berühren des zweiten Bedienabschnitts (220) oder manuelle Annähern an den zweiten Bedienabschnitt (220) zu sensieren, um das zweite Berührungssignal (230) bereitzustellen.

6. Bedienvorrichtung (105, 107) gemäß einem der vorangegangenen Ansprüche, mit einer Zuordnungseinrichtung, die dazu ausgebildet ist, um ansprechend auf ein Zuordnungssignal dem ersten Bedienabschnitt (215) eine vierte Fahrzeugfunktion anstelle der ersten Fahrzeugfunktion zuzuordnen und/oder dem zweiten Bedienabschnitt (220) eine fünfte Fahrzeugfunktion anstelle der zweiten Fahrzeugfunktion zuzuordnen.

7. Bedienvorrichtung (105, 107) gemäß Anspruch 6, bei der die Dreheinheit (210) ausgebildet ist, um unter Verwendung des Zuordnungssignals und des ersten Berührungssignals (225) eine vierte Drehcharakteristik der Drehbewegung (A) einzustellen und/oder unter Verwendung des Zuordnungssignals und des zweiten Berührungssignals (230) eine fünfte Drehcharakteristik der Drehbewegung (A) einzustellen.

8. Bedienvorrichtung (105, 107) gemäß einem der vorangegangenen Ansprüche, bei der die Dreheinheit (210) einen Drehsensor (250) umfasst, der dazu ausgebildet ist, um die Drehbewegung (A) zu sensieren und ein Drehsignal bereitzustellen.

9. Bedienvorrichtung (105, 107) gemäß Anspruch 8, mit einer Steuereinrichtung (255), die dazu ausgebildet ist, um unter Verwendung des Drehsignals und des ersten Berührungssignals (225) ein erstes Steuersignal (260) zum Ansteuern zumindest der dem ersten Bedienabschnitt (215) zugeordneten Fahrzeugfunktion auszugeben oder unter Verwendung des Drehsignals und des zweiten Berührungssignals (230) ein zweites Steuersignal (265) zum Ansteuern zumindest der dem zweiten Bedienabschnitt (220) zugeordneten Fahrzeugfunktion auszugeben, wobei die Fahrzeugfunktionen zumindest eine Fahrstufe, Fahrerlebnisstufe, Komfortstufe, Infotainmenteinstellung, Lichteinstellung oder Menüeinstellung umfassen.

10. Bedienvorrichtung (105, 107) gemäß einem der vorangegangenen Ansprüche, bei der der Grundkörper (200) zumindest einen dritten Bedienabschnitt (400) zum Einstellen zumindest einer dem dritten Bedienabschnitt (400) zugeordneten oder zuordenbaren dritten Fahrzeugfunktion des Fahrzeugs (100) aufweist, wobei die Elektronikeinheit (205) dazu ausgebildet ist, um ein drittes Berührungssignal bereitzustellen, das ein manuelles Berühren des dritten Bedienabschnitts (400) oder Annähern an den dritten Bedienabschnitt (400) repräsentiert, wobei die Dreheinrichtung (210) dazu ausgebildet ist, um ansprechend auf das dritte Berührungssignal eine sich von der ersten Drehcharakteristik (235) und/oder zweiten Drehcharakteristik (240) unterscheidende dritte Drehcharakteristik der Drehbewegung (A) einzustellen.

11. Lenkrad (110), Armaturenbrett, Mittelkonsole oder Armlehne für ein Fahrzeug (100) mit einer Bedienvorrichtung (105, 107) gemäß einem der vorangegangenen Ansprüche.

12. Fahrzeug (100) mit einer Bedienvorrichtung (105, 107) gemäß einem der Ansprüche 1 bis 10.

13. Verfahren (1300) zum Betreiben einer Bedienvorrichtung (105, 107) gemäß einem der Ansprüche 1 bis 10, wobei das Verfahren (1300) die folgenden Schritte aufweist:
Einlesen (1305) eines ersten Berührungssignals (225), das ein manuelles Berühren des ersten Bedienabschnitts (215) oder Annähern an den ersten Bedienabschnitt (215) der Bedienvorrichtung (105, 107) repräsentiert, oder eines zweiten Berührungssignals (230), das ein manuelles Berühren des zweiten Bedienabschnitts (220) oder Annähern an den zweiten Bedienabschnitt (220) der Bedienvorrichtung (105, 107) repräsentiert, und Einstellen (1310) einer ersten Drehcharakteristik (235) unter Verwendung des ersten Berührungssignals (225) oder einer sich von der ersten Drehcharakteristik (235) unterscheidenden, zweiten Drehcharakteristik (240) unter Verwendung des zweiten Berührungssignals (230).

## Claims

1. Operator control apparatus (105, 107) for a vehicle (100), wherein the operator control apparatus (105, 107) comprises the following features:
a rotatable base body (200) having a first operator control section (215) for adjusting at least one first vehicle function of the vehicle (100), which first vehicle function is associated or associable with the first operator control section (215),
an electronics unit (205) designed to provide a first touch signal (225), which represents a manual touch of the first operator control section (215) or approach toward the first operator control section (215), and
a rotation unit (210) to allow a rotary movement (A) of the base body (200),
**characterized by** a second operator control section (220) of the base body (200) for adjusting at least one second vehicle function of the vehicle (100), which second vehicle function is associated or associable with the second operator control section (220), wherein the electronics unit (205) provides a second touch signal (230), which represents a manual touch of the second operator control section (220) or approach toward the second operator control section (220), and wherein the rotation unit (210) is designed to respond to the first touch signal (225) by adjusting a first rotation characteristic (235) of the rotary movement (A) and to respond to the second touch signal (230) by adjusting a second rotation characteristic (240) of the rotary movement (A), which is different than the first rotation characteristic (235).

2. Operator control apparatus (105, 107) according to Claim 1, in which the base body (200) is in cylindrical and/or hollow and/or tiltable form.

3. Operator control apparatus (105, 107) according to either of the preceding claims, in which the first operator control section (215) and the second operator control section (220) are rigidly connected to one another.

4. Operator control apparatus (105, 107) according to one of the preceding claims, in which the rotation unit (210) comprises an electrical actuator (248), in particular an MRF unit, in order to produce the first and/or the second rotation characteristic (235, 240).

5. Operator control apparatus (105, 107) according to one of the preceding claims, in which the electronics unit (205) is arranged in the base body (200) and/or comprises a touch sensor system and/or an approach sensor system designed to sense the manual touch of the first operator control section (215) or manual approach toward the first operator control section (215) in order to provide the first touch signal (225), and/or to sense the manual touch of the second operator control section (220) or manual approach toward the second operator control section (220) in order to provide the second touch signal (230) .

6. Operator control apparatus (105, 107) according to one of the preceding claims, having an association device designed to respond to an association signal by associating a fourth vehicle function with the first operator control section (215) instead of the first vehicle function and/or by associating a fifth vehicle function with the second operator control section (220) instead of the second vehicle function.

7. Operator control apparatus (105, 107) according to Claim 6, in which the rotation unit (210) is designed to use the association signal and the first touch signal (225) to adjust a fourth rotation characteristic of the rotary movement (A) and/or to use the association signal and the second touch signal (230) to adjust a fifth rotation characteristic of the rotary movement (A).

8. Operator control apparatus (105, 107) according to one of the preceding claims, in which the rotation unit (210) comprises a rotation sensor (250) designed to sense the rotary movement (A) and to provide a rotation signal.

9. Operator control apparatus (105, 107) according to Claim 8, having a control device (255) designed to use the rotation signal and the first touch signal (225) to output a first control signal (260) for actuating at least the vehicle function associated with the first operator control section (215) or to use the rotation signal and the second touch signal (230) to output a second control signal (265) for actuating at least the vehicle function associated with the second operator control section (220), wherein the vehicle functions comprise at least one gear, driving experience level, comfort level, infotainment setting, lights setting or menu setting.

10. Operator control apparatus (105, 107) according to one of the preceding claims, in which the base body (200) comprises at least one third operator control section (400) for adjusting at least one third vehicle function of the vehicle (100), which third vehicle function is associated or associable with the third operator control section (400), wherein the electronics unit (205) is designed to provide a third touch signal that represents a manual touch of the third operator control section (400) or approach toward the third operator control section (400), wherein the rotation device (210) is designed to respond to the third touch signal by adjusting a third rotation characteristic of the rotary movement (A), which is different than the first rotation characteristic (235) and/or the second rotation characteristic (240).

11. Steering wheel (110), dashboard, centre console or armrest for a vehicle (100) having an operator control apparatus (105, 107) according to one of the preceding claims.

12. Vehicle (100) having an operator control apparatus (105, 107) according to one of Claims 1 to 10.

13. Method (1300) for operating an operator control apparatus (105, 107) according to one of Claims 1 to 10, wherein the method (1300) comprises the following steps: reading in (1305) a first touch signal (225), which represents a manual touch of the first operator control section (215) or approach toward the first operator control section (215) of the operator control apparatus (105, 107), or a second touch signal (230), which represents a manual touch of the second operator control section (220) or approach toward the second operator control section (220) of the operator control apparatus (105, 107); and adjusting (1310) a first rotation characteristic (235) using the first touch signal (225) or a second rotation characteristic (240), which is different than the first rotation characteristic (235), using the second touch signal (230).

## Revendications

1. Dispositif de commande (105, 107) pour un véhicule (100), dans lequel le dispositif de commande (105, 107) présente les particularités suivantes :
un corps de base rotatif (200) pourvu d'une première partie de commande (215) pour régler au moins une première fonction de véhicule du véhicule (100), associée ou pouvant être associée à la première partie de commande (215)
une unité électronique (205) qui est réalisée pour fournir un premier signal de contact (225) qui représente un contact manuel avec la première partie de commande (215) ou une approche manuelle de la première partie de commande (215), et
une unité rotative (210) pour permettre un mouvement de rotation (A) du corps de base (200),
**caractérisé par** une deuxième partie de commande (220) du corps de base (200) pour régler au moins une deuxième fonction de véhicule du véhicule (100), associée ou pouvant être associée à la deuxième partie de commande (220), dans lequel l'unité électronique (205) fournit un deuxième signal de contact (230) qui représente un contact manuel avec la deuxième partie de commande (220) ou une approche manuelle de la deuxième partie de commande (220), et dans lequel l'unité rotative (210) est réalisée pour régler une première caractéristique de rotation (235) du mouvement de rotation (A) en réponse au premier signal de contact (225), et pour régler une deuxième caractéristique de rotation (240), différente de la première caractéristique de rotation (235), du mouvement de rotation (A) en réponse au deuxième signal de contact (230) .

2. Dispositif de commande (105, 107) selon la revendication 1, dans lequel le corps de base (200) est configuré en forme de rouleau et/ou de manière creuse et/ou à bascule.

3. Dispositif de commande (105, 107) selon l'une quelconque des revendications précédentes, dans lequel la première partie de commande (215) et la deuxième partie de commande (220) sont reliées rigidement l'une à l'autre.

4. Dispositif de commande (105, 107) selon l'une quelconque des revendications précédentes, dans lequel l'unité rotative (210) comprend un actionneur électrique (248), en particulier une unité MRF, pour générer la première et/ou la deuxième caractéristique de rotation (235, 240).

5. Dispositif de commande (105, 107) selon l'une quelconque des revendications précédentes, dans lequel l'unité électronique (205) est disposée dans le corps de base (200) et/ou présente un système de capteurs de contact et/ou un système de capteurs de proximité qui sont réalisés pour détecter le contact manuel avec la première partie de commande (215) ou l'approche manuelle de la première partie de commande (215) afin de fournir le premier signal de contact (225) et/ou pour détecter le contact manuel avec la deuxième partie de commande (220) ou l'approche manuelle de la deuxième partie de commande (220) afin de fournir le deuxième signal de contact (230).

6. Dispositif de commande (105, 107) selon l'une quelconque des revendications précédentes, comprenant un moyen d'association qui est réalisé, en réponse à un signal d'association, pour associer une quatrième fonction de véhicule au lieu de la première fonction de véhicule à la première partie de commande (215) et/ou pour associer une cinquième fonction de véhicule au lieu de la deuxième fonction de véhicule à la deuxième partie de commande (220).

7. Dispositif de commande (105, 107) selon la revendication 6, dans lequel l'unité rotative (210) est réalisée pour régler une quatrième caractéristique de rotation du mouvement de rotation (A) en utilisant le signal d'association et le premier signal de contact (225) et/ou pour régler une cinquième caractéristique de rotation du mouvement de rotation (A) en utilisant le signal d'association et le deuxième signal de contact (230).

8. Dispositif de commande (105, 107) selon l'une quelconque des revendications précédentes, dans lequel l'unité rotative (210) comprend un capteur de rotation (250) qui est réalisé pour détecter le mouvement de rotation (A) et pour fournir un signal de rotation.

9. Dispositif de commande (105, 107) selon la revendication 8, comprenant un moyen de régulation (255) qui est réalisé, en utilisant le signal de rotation et le premier signal de contact (225), pour sortir un premier signal de régulation (260) pour piloter au moins la fonction de véhicule associée à la première partie de commande (215), ou en utilisant le signal de rotation et le deuxième signal de contact (230), pour sortir un deuxième signal de régulation (265) pour piloter au moins la fonction de véhicule associée à la deuxième partie de commande (220), dans lequel les fonctions de véhicule comprennent au moins un niveau de conduite, un niveau d'expérience de conduite, un niveau de confort, un réglage d'infodivertissement, un réglage de lumière ou un réglage de menu.

10. Dispositif de commande (105, 107) selon l'une quelconque des revendications précédentes, dans lequel le corps de base (200) présente au moins une troisième partie de commande (400) pour régler au moins une troisième fonction de véhicule du véhicule (100) associée ou pouvant être associée à la troisième partie de commande (400), dans lequel l'unité électronique (205) est réalisée pour fournir un troisième signal de contact qui représente un contact manuel avec la troisième partie de commande (400) ou une approche manuelle de la troisième partie de commande (400), dans lequel le moyen de rotation (210) est réalisé pour régler une troisième caractéristique de rotation, différente de la première caractéristique de rotation (235) et/ou de la deuxième caractéristique de rotation (240), du mouvement de rotation (A) en réponse au troisième signal de contact.

11. Volant (110), tableau de bord, console centrale ou accoudoir pour un véhicule (100), comprenant un dispositif de commande (105, 107) selon l'une quelconque des revendications précédentes.

12. Véhicule (100) comprenant un dispositif de commande (105, 107) selon l'une quelconque des revendications 1 à 10.

13. Procédé (1300) permettant de faire fonctionner un dispositif de commande (105, 107) selon l'une quelconque des revendications 1 à 10, dans lequel le procédé (1300) présente les étapes suivantes consistant à :
lire (1305) un premier signal de contact (225) qui représente un contact manuel avec la première partie de commande (215) ou une approche manuelle de la première partie de commande (215) du dispositif de commande (105, 107), ou un deuxième signal de contact (230) qui représente un contact manuel avec la deuxième partie de commande (220) ou une approche manuelle de la deuxième partie de commande (220) du dispositif de commande (105, 107), et
régler (1310) une première caractéristique de rotation (235) en utilisant le premier signal de contact (225) ou une deuxième caractéristique de rotation (240), différente de la première caractéristique de rotation (235), en utilisant le deuxième signal de contact (230).
